# EUROPEAN PATENT SPECIFICATION

(11) **EP 0 961 375 B1**
(45) Date of publication and mention of the grant of the patent: **16.05.2001**
(21) Application number: 98830186.7
(22) Date of filing: 27.03.1998
(51) Int. Cl.: H02B 1/00, H02B 1/46, H02B 1/28, H02G 3/06

(54) **A liquid-tight coupling for boxes for electric material**
Flüssigkeitdichte Kupplung für Gehäuse für elektrische Installation
Raccord étanche de boîtier pour matériel électrique

(43) Date of publication of application: 01.12.1999
(73) Proprietor: Bertoldo & C. Srl, 10078 Venaria Reale (Torino) (IT)
(72) Inventor: Bertoldo, Piero, 10070 Balangero, Torino (IT)
(74) Representative: Marchitelli, Mauro

(56) References cited:
- EP-A- 0 106 001
- EP-A- 0 420 273
- US-A- 4 090 029
- US-A- 4 468 535
- US-A- 5 068 496
- US-A- 5 704 803

## Description

The present invention relates to a liquid-tight coupling for boxes for electric material.

The invention has been developed in particular in view of the application to boxes for domestic or industrial electric installations but can be applied in any case in which there is the need to make a liquid-tight connection between a protection element of an electric installation (such as a conduit, an insulated cable, a flexible sheath, etc.) and a wall which, depending on the applications, could be the wall of a pull box, of a housing for electric or -electronic equipment or the casing of an electric machine such as for example a transformer or a motor.

More particularly, the invention relates to a coupling according to the preamble of claim 1, which is known from US-A-4 468 535. This document discloses a coupling including a tubular portion provided with snap engagement teeth, a radial bearing surface and an axially deformable annular seal with a rectangular cross-section which in use is compressed between the bearing surface and a wall to which the coupling is connected.

The object of the present invention is to provide an improved coupling which is adapted to provide a liquid-tight joint with walls with considerably different thickness.

According to the present invention, this object is achieved by a coupling and a cap having the characteristics forming the subject of the independent claims.

The characteristics and the advantages of the coupling according to the invention will become evident in the course of the detailed description which follows, given purely by way of non-limiting example, with reference to the annexed drawings, in which:
- figure **1** is a perspective view showing a box for electric material provided with different types of couplings according to the present invention,
- figure **2** is a cross section of the box of figure 1,
- figure **3** is a cross section in greater scale showing the coupling separated from the box, and
- figures **4** and **5** are axial sections analogous to the one of figure 3 showing the coupling connected to two walls respectively with minimum and maximum thickness.

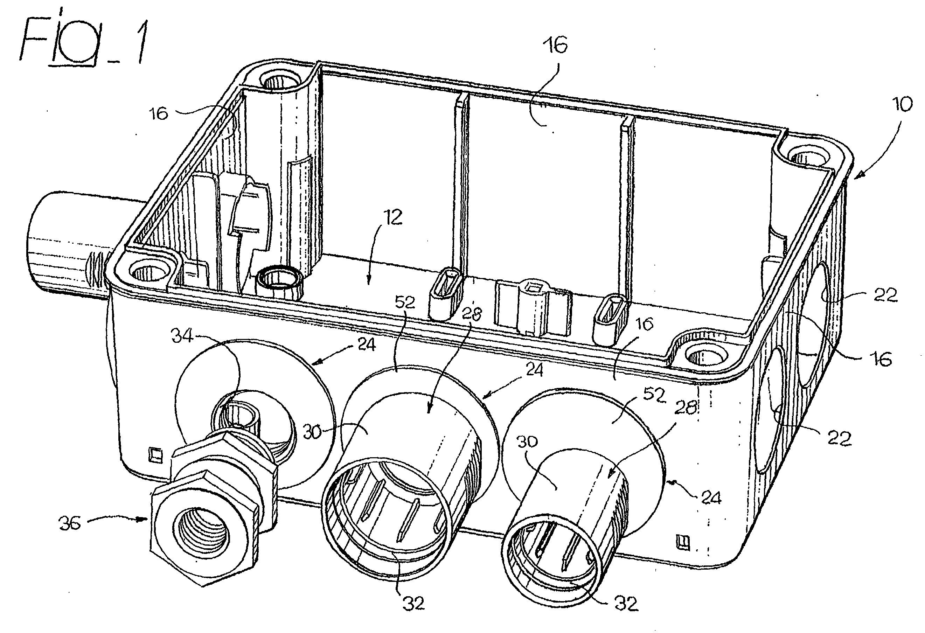

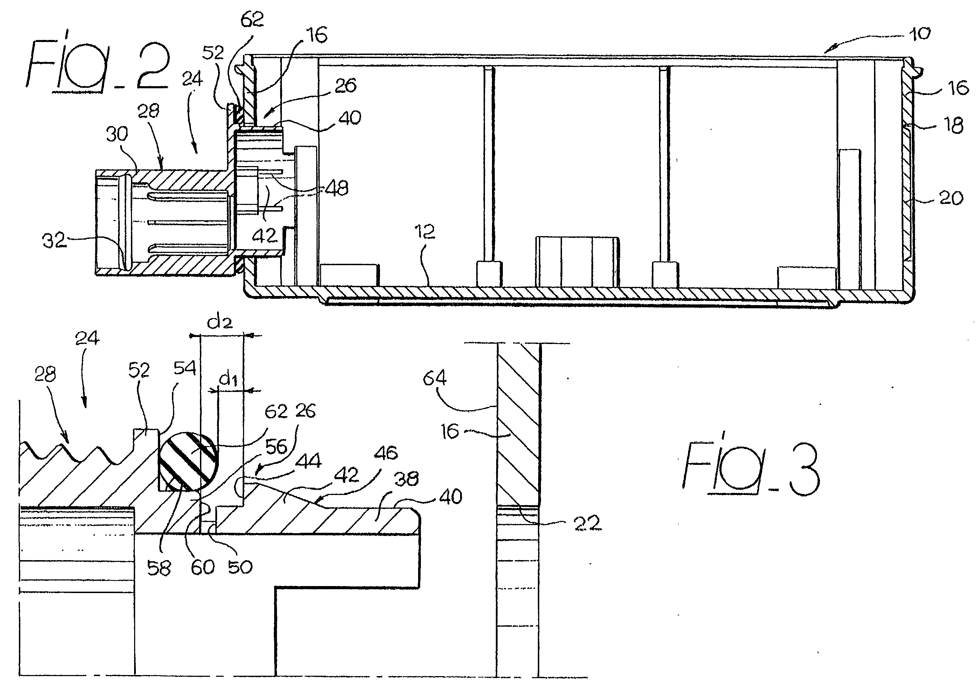

With reference to figures 1 and 2, at 10 is indicated a box for electric material, which can be used as a pull box or for containing electric or electronic equipment of various nature in domestic or industrial electric installations. The box 10 comprises a bottom wall 12 and four lateral walls 16 and has an upper opening in correspondence of which is intended to be fixed a cover (not shown). As is visible in figure 2, on the lateral walls 16 are formed non-though circular notches 18 which define lines of preferential breaking which permit to form through apertures 22 by removing the discs 20 surrounded by the notches 18. In alternative, the box 10 may have no notches 18 and in this case the through holes 22 should be formed with a drilling apparatus of known type. Furthermore, the lateral walls 16 could be already provided with holes and could have caps formed with the same sealing system as the couplings and the couplings could be inserted in the desired holes after having removed the caps.

In the figures is indicated at 24 a liquid-tight coupling according to the present invention. As will be better described in the following, this coupling is adapted to be mounted on boxes of various type and does not require a particular configuration of the box. The only requirement for fitting the coupling 24 on any commercially available box is the existence of a through aperture 22 with suitable dimensions.

The coupling 24 has a monolithic body of injection moulded plastic material in which are defined an attachment section 26 and a coupling section 28. The couplings according to the present invention form a family of articles which differ from each other for the shape and the dimensions of the coupling section 28, whereas the attachment section 26 is the same for all the couplings of the same family. It is then possible to obtain different families of articles by varying the dimensions of the attachment section 26.

The coupling section 28 has a shape which depends on the type of element which must be connected to the box 10. In the most common cases, the coupling 24 is used for connecting to the box 10 smooth or corrugated conduits, smooth or spiral flexible sheaths or electric cables provided with insulating sheath. In figure 1 are shown the typical configurations of the coupling sections 28 for the connection of either insulated cables or conduits and sheaths. When an electric cable provided with an insulating sheath must be connected to the box 10, the coupling section has simply the shape of a threaded hole 34, with metric or PG thread, adapted to receive a clamping device per se known. In addition to the case of the threaded hole which receives a known clamping fitting with a male thread, there is the possibility to provide a fitting which has the attachment system according to the invention and which reproduces all the parts of a clamping device of a known type. In practice this would be a standard clamping device having the snap engagement system which will be disclosed in detail in the following.

When the coupling 24 serves for connecting to the box 10 a protection element formed by a conduit or by a sheath (smooth, with spiral grooves or corrugated) the coupling section 28 has a tubular portion 30, preferably provided with a seat 32 adapted to receive a seal of the type disclosed in European patent No. 515325 of the same Applicant, adapted to provide both mechanical connection and liquid-tightness on the surface of conduits both smooth and corrugated.

The coupling section 28 could also be formed in any other way adapted to guarantee the mechanical connection, preferably liquid-tight, between the coupling 24 and the element to be connected to the box 10. For example, for connecting metal conduits, the coupling section 28 could be formed as disclosed in European patent No. 568032 of the same Applicant.

The principle on which the invention is based could also be used for manufacturing a cap for the fluid-tight closure of an aperture. In this case the coupling section is substituted by a closed wall.

The coupling portion 28, both when it is formed by a tubular portion and in the case in which it is formed by a threaded hole, can be coaxial or eccentric with respect to the attachment section 26. As disclosed in a contemporary patent application of the same Applicant titled "A coupling with eccentric sections, in particular for boxes for electric material", the eccentricity of the coupling portion 28 with respect to the attachment portion 26 permits to maintain conduits with different diameters at the same distance from a wall.

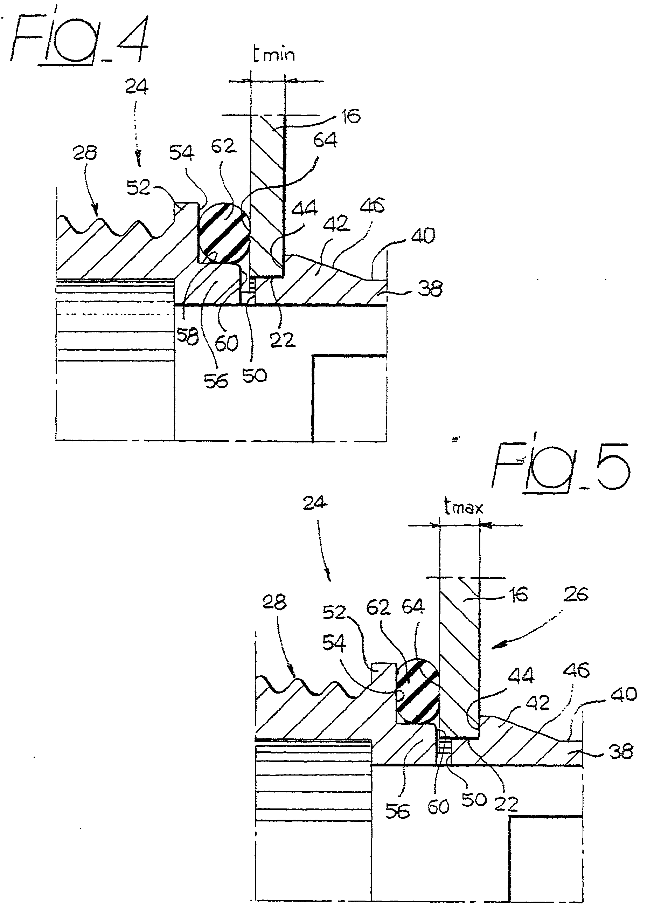

As shown in figures 2 and 3, the attachment section 26 of the coupling 24 has a tubular portion 38 with an external surface 40 having a diameter such that it engages with small clearance the aperture 22 of the wall 16. On the tubular portion 38 are formed two or more teeth 42 (only one of which is visible in figure 3) projecting outwardly from the surface 40 and elastically deformable in a radial direction. Each tooth 42 has a stop surface 44 directed in a radial direction and an inclined surface 46 adapted to cooperate with the edge of the aperture 22 for permitting the radial deformation of the tooth 42 during insertion of the tubular portion 40 in the aperture 22. The radial deformability of each tooth 42 is obtained by means of three through cuts formed in the tubular portion 38 and which extend along three sides of the tooth 42. Two of such cuts are directed in an axial direction and are indicated at 48 in figure 2 and the third one is directed in a tangential direction and is indicated at 50 in figure 3.

The coupling 24 has an integral disc-shaped portion 52 forming a dividing wall between the attachment section 26 and the coupling section 28. The disc-shaped portion 52 has a bearing surface 54 which extends outwardly in a radial direction with respect to the tubular portion 40. At the base of the bearing surface 54 is formed a step 56 having a cylindrical surface 58 with a diameter greater than the outer diameter of the tubular portion 38 and a radial abutment surface 60.

A seal 62 of elastically deformable material is placed in correspondence with the bearing surface 54. The seal 62 has an annular shape with an inner diameter about equal to the diameter of the surface 58. The transversal cross section of the seal 62 in undeformed conditions is circular. The seal 62 is intended to be compressed axially between the bearing surface 54 and the external surface 64 of the wall 16. It is important that the seal 62 is formed of a material with is sufficiently yielding in order to mount coupling without need for an excessive force and which, on the other hand, is sufficiently rigid to maintain a sealing contact with the surfaces 54 and 64. Tests carried out by the Applicant have shown that the material forming the seal 62 should have a hardness comprised between 10 and 30 shore A. The seal 62 can be formed separately from the coupling 22 and mounted thereon or could be formed directly on the coupling, for example by the deposition of thermofusible material (hot melt) or of materials belonging to the family of mono or bi-component polyurethanes.

In undeformed conditions, the distance in axial direction between the seal 62 and the stop surface 44 of the teeth 42, indicated d1, is less than the minimum thickness of the wall 16 to which the coupling 24 is intended to be connected. The distance in axial direction between the abutment surface 60 and the stop surface 44, indicated d2, on the contrary represents the maximum thickness of the wall 16.

Figures 4 and 5 show the coupling mounted on a wall 16 with minimum thickness tₘᵢₙ and on a wall 16 with maximum thickness tₘₐₓ. In both cases the seal 62 is axially compressed with respect to the undeformed condition and applies an elastic force on the walls 54 and 64, which guarantee an effective liquids-tightness. An important advantage of the coupling according to the present invention is that it is adapted to be coupled with any wall having a thickness comprised between tₘᵢₙ and tₘₐₓ. For example, the family of couplings intended to be mounted in holes with a diameter of 32 mm is' adapted for walls with a thickness comprised between 2,2 and 2,8 mm.

Another important advantage of the coupling according to the invention is that it does not require any particular configuration of the attachment zone of the wall 16. In fact, the coupling 2 can be mounted on any wall 16 having simply a hole 22 with a diameter about equal to the diameter of the tubular portion 40 and any thickness comprised between the minimum and maximum limit. Therefore, the coupling according to the present invention can be used in combination with boxes for electric material coming from different manufactures and permits an effective protection against the entry of liquids or humidity independently of the manufacturing tolerances of the boxes.

The coupling according to the present invention is mounted with a simple insertion thereof in the hole 22 and permits to reduce the installation time with respect to the couplings which require tightening of threaded elements or the like. The coupling 24 in addition can be easily removed from the box simply by acting manually or using the point of a screwdriver on the teeth 42 from within the box and extracting the tubular portion 38 from the hole 22.

## Claims

1. A liquid-tight coupling, in particular for boxes for electric material, comprising an attachment section (26) for connecting the coupling (24) in a hole (22) of a wall (16), and a coupling section (28) provided with means for the connection to a protection element of an electric installation, the attachment section (26) comprising:
- a tubular portion (38) provided with snap engagement means (42) having at least one stop surface (44) projecting from the outer surface (40) of said tubular portion (38) for engaging an inner surface of the wall (16),
- a bearing surface (54) axially spaced apart from said stop surface (44) and placed outside of said tubular portion (38), and
- an axially deformable annular seal (62) placed in correspondence with said bearing surface (54),
wherein the distance (d1) in undeformed condition between the seal (62) and said stop surface (44) is less than the minimum thickness (tₘᵢₙ) of a wall (16) to which the coupling (24) is intended to be connected,
characterized in that in undeformed conditions said seal (62) has a circular cross-section and in that the seal (62) is made of a material having a hardness comprised between 10 and 30 shore A.

2. A coupling according to claim 1, characterized in that at the base of said bearing surface (54) there is formed a step (56) having an abutment surface (70) which is spaced apart in an axial direction from said stop surface (44) by a quantity (d2) which is substantially equal to the maximum thickness (tₘₐₓ) of the wall (16) to which the coupling (24) is intended to be connected.

3. A coupling according to claim 1, characterized in that the seal (62) is formed by deposition on the coupling (24) of a thermofusible or foam material.

4. A coupling according to claim 1, characterized in that the seal (62) is formed by a separate component mounted on the coupling (24).

5. A coupling according to claim 1, characterized in that said snap engagement means comprise at least a pair of elastically deformable teeth (42) formed integrally in the tubular portion (38) by through cuts (48, 50).

6. A liquid-tight cap, in particular for boxes for electric material, comprising an attachment section (26) intended to be inserted into an aperture (22) of a wall (16),
characterized in that the attachment section (26) comprises:
- a tubular portion (38) provided with snap engagement means (42) having at least one stop surface (44) projecting from the outer surface (40) of said tubular portion (38) for engaging an inner surface of the wall (16),
- a bearing surface (54) axially spaced apart from said stop surface (44) and placed outside of said tubular portion (38),
- an axially deformable annular seal (62) arranged in correspondence with said bearing surface (54),
wherein the distance (d1) in undeformed condition between the seal (62) and said stop surface (44) is less than the minimum thickness (tₘᵢₙ) of the wall (16),
wherein in undeformed conditions said seal (62) has a circular cross-section and wherein the seal (62) is made of a material having a hardness comprised between 10 and 30 shore A.

## Patentansprüche

1. Flüssigkeitsdichte Kupplung, insbesondere für Gehäuse für elektrische Installation, umfassend ein Befestigungssegment (26) zum Einsetzen der Kupplung (24) in ein Loch (22) einer Wand (16) und ein Kupplungssegment (28), das mit Mitteln zum Anschluß an ein Schutzelement einer elektrischen Anlage versehen ist, wobei das Befestigungssegment (26) umfaßt:
- einen rohrförmigen Abschnitt (38), der mit Rastverbindungsmitteln (42) versehen ist, die zumindest eine von der Außenfläche (40) des rohrförmigen Abschnitts (38) vorspringende Anschlagfläche (44) zum Angriff an einer Innenfläche der Wand (16) aufweisen,
- eine Lagerfläche (54), die von der Anschlagfläche (44) axial beabstandet und außerhalb des rohrförmigen Abschnitts (38) plaziert ist, und
- eine axial verformbare Ringdichtung (62), die in Übereinstimmung mit der Lagerfläche (54) angeordnet ist, wobei der Abstand (dl) zwischen der Dichtung (62) und der Anschlagfläche (44) im undeformierten Zustand geringer ist als die Minimaldicke (tₘᵢₙ) einer Wand (16), an die die Kupplung (24) angeschlossen werden soll,
dadurch gekennzeichnet, daß
die Dichtung (62) im undeformierten Zustand einen kreisförmigen Querschnitt aufweist und daß die Dichtung (62) aus einem Material mit einer Shore-A-Härte zwischen 10 und 30 besteht.

2. Kupplung gemäß Anspruch 1, dadurch gekennzeichnet, daß am Unterteil der Lagerfläche (54) eine Stufe (56) mit einer Auflagerfläche (60) ausgebildet ist, die von der Anschlagfläche (44) in axialer Richtung um eine Größe (d2) beabstandet ist, die im wesentlichen gleich der Maximaldicke (tₘₐₓ) der Wand (16) ist, an die die Kupplung (24) angeschlossen werden soll.

3. Kupplung gemäß Anspruch 1, dadurch gekennzeichnet, daß die Dichtung (62) durch Ablagerung eines thermoschmelzbaren Werkstoffs oder Schaumstoffs auf der Kupplung (24) geformt wird.

4. Kupplung gemäß Anspruch 1, dadurch gekennzeichnet, daß die Dichtung (62) durch ein separates Bauteil gebildet ist, das auf der Kupplung (24) aufsitzt.

5. Kupplung gemäß Anspruch 1, dadurch gekennzeichnet, daß die Rastverbindungsmittel zumindest ein Paar elastisch verformbarer Zähne (42) umfassen, die durch Durchstiche (48, 50) einstückig in dem rohrförmigen Abschnitt (38) eingeformt sind.

6. Flüssigkeitsdichte Kappe, insbesondere für Gehäuse für elektrische Installation, umfassend ein zum Einsetzen in eine Durchgangsöffnung (22) einer Wand (16) bestimmtes Befestigungssegment (26),
dadurch gekennzeichnet, daß
das Befestigungssegment (26) umfaßt:
- einen rohrförmigen Abschnitt (38), der mit Rastverbindungsmitteln (42) versehen ist, die zumindest eine von der Außenfläche (40) des rohrförmigen Abschnitts (38) vorspringende Anschlagfläche (44) zum Angriff an einer Innenfläche der Wand (16) aufweisen,
- eine Lagerfläche (54), die von der Anschlagfläche (44) axial beabstandet und außerhalb des rohrförmigen Abschnitts (38) angeordnet ist,
- eine axial verformbare Ringdichtung (62), die in Übereinstimmung mit der Lagerfläche (54) angeordnet ist,
wobei der Abstand (d1) zwischen der Dichtung (62) und der Anschlagfläche (44) im undeformierten Zustand geringer ist als die Minimaldicke (tₘᵢₙ) der Wand (16),
wobei die Dichtung (62) im undeformierten Zustand einen kreisförmigen Querschnitt aufweist und wobei die Dichtung (62) aus einen Material mit einer Shore-A-Härte zwischen 10 und 30 besteht.

## Revendications

1. Raccord étanche au liquide, en particulier pour des boîtes pour du matériel électrique, comportant une section de fixation (26) pour raccordement du raccord (24) dans un trou (22) d'une paroi (16), et une section de raccordement (28) pourvue de moyens pour le raccordement sur un élément de protection d'une installation électrique, la section de fixation (26) comportant :
- une partie tubulaire (38) pourvue de moyens d'engagement par encliquetage (42) ayant au moins une surface de butée (44) qui dépasse de la surface externe (40) de ladite partie tubulaire (38) afin d'engager une surface interne de la paroi (16),
- une surface d'appui (54) axialement espacée de ladite surface de butée (44) et placée à l'extérieur de ladite partie tubulaire (38), et
- un joint annulaire axialement déformable (62) placé en correspondance avec ladite surface d'appui (54),
la distance (d1) dans l'état non déformé entre le joint (62) et ladite surface de butée (44) étant inférieure à l'épaisseur minimum (tₘᵢₙ) d'une paroi (16) sur laquelle le raccord (24) est prévu pour être raccordé,
caractérisé en ce que, dans les états non déformés, ledit joint (62) présente une section circulaire et en ce que le joint (62) est fabriqué dans une matière ayant une dureté comprise entre 10 et 30 shore A.

2. Raccord selon la revendication 1, caractérisé en ce que, à la base de ladite surface d'appui (54), est formé un épaulement (56) ayant une surface de butée (70) qui est espacée dans une direction axiale de ladite surface de butée (44) d'une quantité (d2) qui est sensiblement égale à l'épaisseur maximum (tₘₐₓ) de la paroi (16) sur laquelle le raccord (24) est prévu pour être raccordé.

3. Raccord selon la revendication 1, caractérisé en ce que le joint (62) est formé par dépôt sur le raccord (24) d'une matière thermofusible ou en mousse.

4. Raccord selon la revendication 1, caractérisé en ce que le joint (62) est formé par un composant séparé monté sur le raccord (24).

5. Raccord selon la revendication 1, caractérisé en ce que lesdits moyens d'engagement par encliquetage comportent au moins une paire de dents élastiquement déformables (42) formées d'un seul tenant dans la partie tubulaire (38) par des découpes (48, 50).

6. Bouchon étanche au liquide, en particulier pour des boîtes pour du matériel électrique, comportant une section de fixation (26) prévue pour être insérée dans une ouverture (22) d'une paroi (16),
caractérisé en ce que la section de fixation (26) comporte :
- une partie tubulaire (38) pourvue de moyens d'engagement par encliquetage (42) ayant au moins une surface de butée (44) qui dépasse de la surface externe (40) de ladite partie tubulaire (38) afin d'engager une surface interne de la paroi (16),
- une surface d'appui (54) axialement espacée de ladite surface de butée (44) et placée à l'extérieur de ladite partie tubulaire (38), et
- un joint annulaire axialement déformable (62) disposé en correspondance avec ladite surface d'appui (54),
la distance (d1) dans l'état non déformé entre le joint (62) et ladite surface de butée (44) étant inférieure à l'épaisseur minimum (tₘᵢₙ) de la paroi (16),
dans les états non déformés, ledit joint (62) présentant une section circulaire et le joint (62) étant fabriqué dans une matière ayant une dureté comprise entre 10 et 30 shore A.
